# EUROPEAN PATENT SPECIFICATION

(11) **EP 2 687 062 B1**
(45) Date of publication and mention of the grant of the patent: **31.10.2018**
(21) Application number: 12710893.4
(22) Date of filing: 07.03.2012
(51) Int. Cl.: H04W 92/12, H04W 88/08

(54) **BASE STATION**
BASISSTATION
STATION DE BASE

(30) Priority: 14.03.2011 US 201113046885
(43) Date of publication of application: 22.01.2014
(73) Proprietor: Intel Deutschland GmbH, 85579 Neubiberg (DE)
(72) Inventor: MUECK, Markus Dominik, 82008 Unterhaching (DE)
(74) Representative: Goddar, Heinz J.
(86) International application number: PCT/EP2012/053895
(87) International publication number: WO 2012/123305

(56) References cited:
- WO-A1-2010/067598
- WO-A2-98/24256
- US-A1- 2006 172 775
- US-A1- 2007 280 159
- US-A1- 2009 170 472

## Description

### Technical Field

Embodiments generally relate to a base station.

### Background

In mobile radio communication systems, base stations typically have to perform computationally expensive reception processing, e.g. decoding, to ensure a high transmission quality. Since computational resources in a base station are limited, method and systems that allow efficient and flexible handling of reception processing tasks are desirable. One example can be found in document US 2007 /280159.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
Figure 1 shows a communication system according to an embodiment.
Figure 2 shows a first diagram illustrating a first spectrum allocation and a second diagram illustrating a second spectrum allocation.
Figure 3 shows a base station of a mobile communication network according to an embodiment.
Figure 4 shows a communication arrangement according to an embodiment.
Figure 5 shows spectrum allocation diagrams and hardware allocation diagrams.
Figure 6 shows a communication arrangement according to an embodiment.
Figure 7 shows a data flow in a communication arrangement.
Figure 8 shows a data flow in a communication arrangement.
Figure 9 shows a data flow in a communication arrangement.
Figure 10 shows a communication arrangement according to an embodiment.
Figure 11 shows spectrum allocation diagrams and hardware allocation diagrams.
Figure 12 shows a data flow in a communication arrangement according to an embodiment.

### Description

The following detailed description refers to the accompanying drawings that show, by way of illustration, specific details and embodiments in which the invention may be practiced. These embodiments are described in sufficient detail to enable those skilled in the art to practice the invention. Other embodiments may be utilized and structural, logical, and electrical changes may be made without departing from the scope of the invention. The various embodiments are not necessarily mutually exclusive, as some embodiments can be combined with one or more other embodiments to form new embodiments.

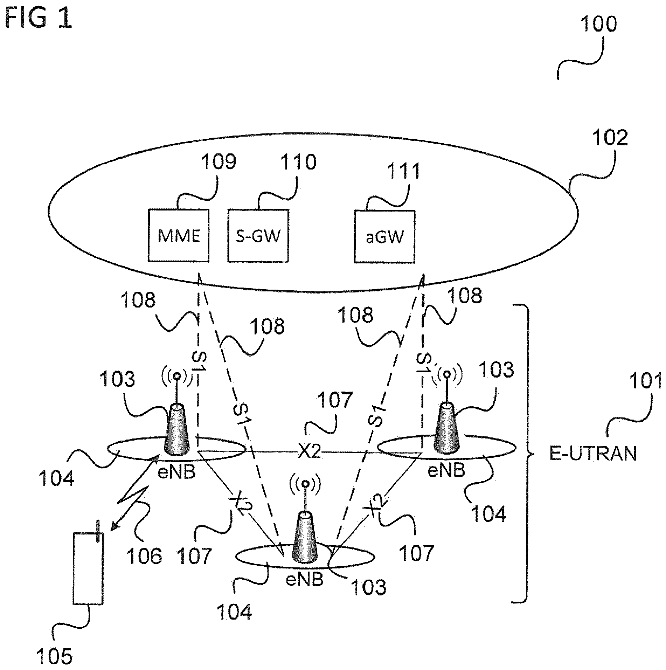

Figure 1 shows a communication system 100 according to an embodiment.

The communication system 100 includes a radio access network (e.g. an E-UTRAN, Evolved UMTS (Universal Mobile Commmunications System) Terrestrial Radio Access Network according to LTE (Long Term Evolution)) 101 and a core network (e.g. an EPC, Evolved Packet Core, according LTE) 102. The radio access network 101 may include base (transceiver) stations (e.g. eNodeBs, eNBs, according to LTE) 103. Each base station 103 provides radio coverage for one or more mobile radio cells 104 of the radio access network 101.

A mobile terminal (also referred to as UE, user equipment) 105 located in a mobile radio cell 104 may communicate with the core network 102 and with other mobile terminals 105 via the base station providing coverage in (in other words operating) the mobile radio cell.

Control and user data are transmitted between a base station 103 and a mobile terminal 105 located in the mobile radio cell 104 operated by the base station 103 over the air interface 106 on the basis of a multiple access method.

The base stations 103 are interconnected with each other by means of a first interface 107, e.g. an X2 interface. The base stations 103 are also connected by means of a second interface 108, e.g. an S1 interface, to the core network, e.g. to an MME (Mobility Management Entity) 109, a Serving Gateway (S-GW) 110 and/or an Advanced Gateway (aGW) 111. For example, the MME 109 is responsible for controlling the mobility of mobile terminals located in the coverage area of E-UTRAN, while the S-GW 110 or the aGW 111 is responsible for handling the transmission of user data between mobile terminals 105 and core network 102.

In the following, it is assumed that each base station 103 may support a plurality of radio access technologies and that those radio access technologies may be operated simultaneously. For example, each base station 103 may provide a radio communication connection via the air interface between itself and the mobile terminal 105 according to LTE, UMTS, GSM (Global System for Mobile Communications), EDGE (Enhanced Data Rates for GSM Evolution) radio access. Accordingly, the radio access network may operate as an E-UTRAN, a UTRAN, a GSM radio access network, or a GERAN (GSM EDGE Radio Access Network). Analogously, the core network 102 may include the functionality of an EPC, a UMTS core network or a GSM core network.

In the following, it is that the network operator has deployed a number of base-stations 103 which have limited processing power (Hardware Processing Resources, HPR). In the framework of spectrum refarming (i.e., GSM spectrum can be used for communication according to UMTS, LTE or other communication standards) and/or the deployment of new 3GPP standards (such as 3GPP LTE, 3GPP LTE Advanced, etc.), each base station 103 may adapt the number of GSM/UMTS/LTE/etc. channels that are simultaneously served by a base station 103. For example, each base station 103 may change the number of dedicated channels that it provides according to a specific radio access technology (e.g. according to GSM, UMTS, LTE etc.) for mobile terminals located in the mobile radio cell that it covers.

This adaptation may for example be done in accordance to user requirements, e.g. depending on which or how many mobile terminals in a certain region (e.g. in the mobile radio cell 104 covered by the base station 103) support a specific radio access technology. Thus, the base stations 103 may be configured differently in various geographic areas due to locally used mobile devices supporting different radio access technologies (e.g. supporting communication according to different 3GPP standard releases).

Such a scenario has for example been introduced by cellular operators in the framework of ETSI RRS (ETSI Reconfigurable Radio Systems Standardization) in July 2010.

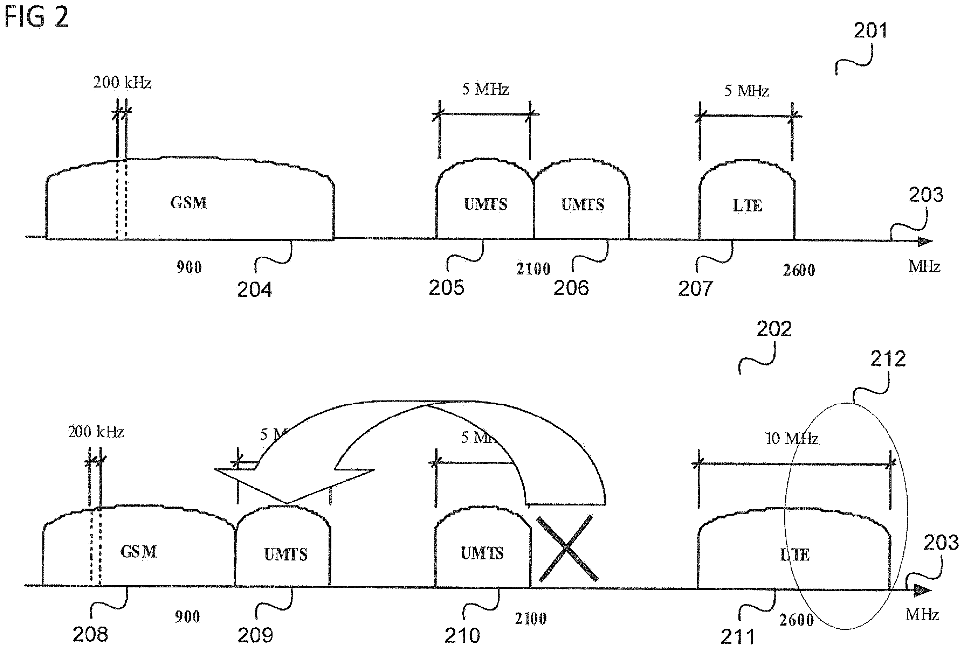

In terms of efficient selection of radio standards to be supported by a base station 103, a base station 103 that can provide communication connections according to a plurality of different radio access technolodies, the base station 103 may perform a RAT (radio access technology) selection approach as illustrated in figure 2.

Figure 2 shows a first diagram 201 illustrating a first spectrum allocation and a second diagram 202 illustrating a second spectrum allocation.

In the diagrams 201, 202, frequency increases along a horizontal frequency axis 203.

It is assumed that a first base station 103 initially operates according to the first spectrum allocation illustrated in the first diagram 201.

In the first spectrum allocation, a first frequency region 204 is allocated to GSM (i.e. is allocated for communication according to GSM), a second frequency region 205 and a third frequency region 206 are allocated to UMTS and a fourth frequency region 207 is allocated to LTE.

It is further assumed that the fourth frequency region 207 should be enlarged, e.g. due to a high number of mobile terminals located in the mobile radio cell 104 which would like to communicate with the base station 103 using communication according to LTE.

Therefore, in order to free up hardware processing resources (HPR) of the base station 103 for being able to support a larger frequency region allocated to LTE (e.g. to be able to carry out the increased decoding effort for the enlarged frequency region), the base station 103 may make the first frequency region 204 allocated to GSM smaller. This is illustrated in the second spectrum allocation shown in the second diagram 202.

In the second spectrum allocation, a fifth frequency region 208 is allocated to GSM, a sixth frequency region 209 and a seventh frequency region 210 are allocated to UMTS, and an eighth frequency region 211 is allocated to LTE.

The fifth frequency region 208 corresponds to a part of the first frequency region 204, i.e. the first frequency region 204 (GSM frequency region) has been made smaller.

The eighth frequency region 211 contains the fourth frequency region 207 and additional spectrum as indicated by oval 212, i.e. the fourth frequency region 207 (LTE frequency region) has been enlarged.

The seventh frequency region 210 corresponds to the second frequency region 205, i.e. the second frequency region 205 has been left constant.

Further, in this example, the sixth frequency region 209 corresponds to the third frequency region 206, i.e. the third frequency region 206 has been relocated to the part of the spectrum that was part of the first frequency region 204 but is not part of the fifth frequency region 208. This relocation may be carried out because of various reasons, e.g. for more efficient spectrum usage or interference mitigation.

In the framework of CoMP, as it may be used according to one embodiment and as defined in the framework of 3GPP LTE Advanced (Coordinated multiple point transmission and reception (CoMP), Downlink coordinated multi-point transmission, Uplink coordinated multi-point reception), massive data exchange between neighbouring base stations 103 is typcially applied. Typically, neighbouring base stations 103 may be connected via fiber.

CoMP can be implemented in two ways: centralized or distributed. In the centralized CoMP transmission concept, there is a central unit (CU) where all CSI (Channel State Information) and data are available. The CU pre-computes all waveforms and sends them over a star-like network to the coordinated base stations acting as remote radio heads (RRHs). The centralized approach typically has a higher backhaul effort since I/Q samples of the waveforms are transmitted. Moreover, latency requirements may be tight, Waveforms typically need to be irradiated time-aligned on a few µs timescale, i.e. within the cyclic prefix (CP). The individual propagation delay over the network requires careful compensation at each RRH. For distributed CoMP transmission a limited set of BS transmit data jointly to multiple terminals in their cells. For each terminal, the serving base station coordinates the data flow coming from the advanced gateway (aGW) to the terminal. As a fundamental requirement of the distributed approach, base stations involved in a CoMP transmission exchange data and CSI over a meshed signaling network. Feeder and signaling interfaces at base stations may be the S1 interface 108 and the X2 interface 107, respectively. It should be noted that data instead of I/Q samples transfer is a lighter burden for the backhaul compared to the centralized approach.

Thus, distributed CoMP mechanisms introduce information exchange between neighbouring BS (over a "meshed signaling network") in order to do a joint transmission. According to one embodiment, the distributed decoding of the information and the related HPR assignment across neighbouring base stations 103 is considered. In other words, according to one embodiment, advantage is made of the fact that HPR may be shared across multiple neighbouring base stations, e.g. to increase overall efficiency. In other words, according to one embodiment, a single base station 103 is not necessarily performing all decoding tasks for communication connections that is provides. For example, according to an embodiment, a solution is provided on how to exploit the processing power of various (e.g. neighbouring) base stations 103 by distributing the hardware resource budget over multiple base stations 103.

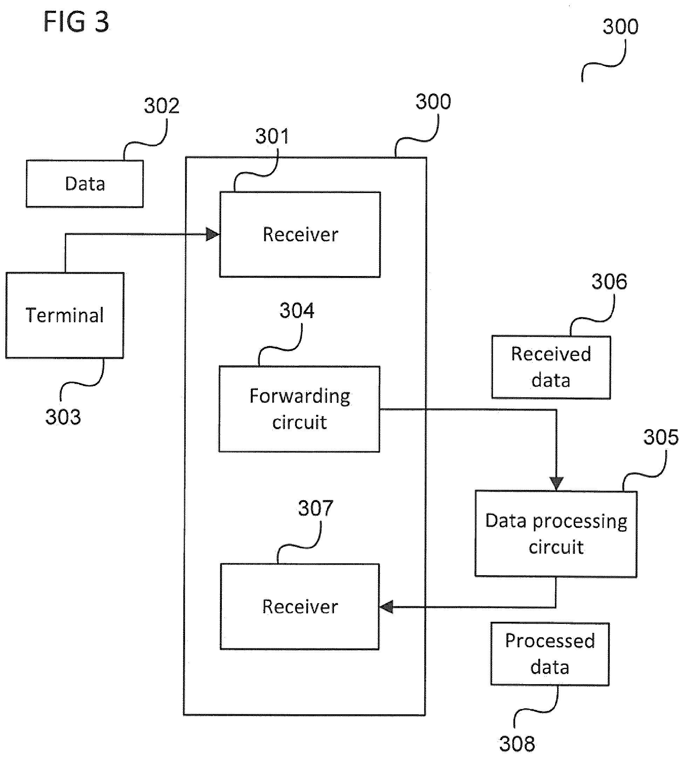

A base station according to an embodiment is described in the following with reference to figure 3.

Figure 3 shows a base station 300 of a mobile communication network according to an embodiment.

The base station 300 includes a first receiver 301 configured to receive data 302 transmitted by a communication terminal 303 wherein the received data is to be processed according to a data reception processing for extracting, from the received data, data to be transmitted from the communication terminal 303.

The base station 300 further includes a forwarding circuit 304 configured to forward the received data 306 to a data processing device 305 of the mobile communication network external to the base station 300 for carrying out at least a part of the data reception processing of the received data 306.

The base station 300 further includes a second receiver 307 configured to receive the processed data 308 from the data processing device 305.

In one embodiment, in other words, processing tasks to be carried out in course of reception by the base station from a mobile terminal may be performed by an external processing device, e.g. a central computer or another base station, which sends the corresponding processed data (or processing results) back to the base station.

Illustratively, according to one embodiment, computational resources such as hardware processing resources are distributed among base stations (e.g. neighbouring base stations). According to one embodiment, the available frequency bands and/or the number of served communication standards may be reduced in the proximity of a heavily loaded base station (or, equivalently, heavily loaded radio cell) in order to free computational resources (e.g. decoding capacity) in neighbouring base stations.

According to one embodiment, selected (but not all) decoding tasks are distributed to one or more other (e.g. neighbouring) base stations.

The data reception processing is for example data link layer processing of the received data.

For example, the data reception processing is decoding of the received data.

According to one embodiment, the data is to be transmitted to another communication device.

The received data are for example baseband sample signal values of a signal transmitted by the communication terminal.

In one embodiment, the processed data is at least one layer 3 data packet.

The processed data is for example at least one IP packet.

The processing may for example include at least one of
multiple-input multiple output decoding;
symbol demapping;
de-interleaving;
channel decoding;
error checking; and
retransmission handling.

According to one embodiment, the first receiver is radio receiver.

The forwarding circuit is for example configured to forward the received data via a landline connection.

In one embodiment, the data processing device is another base station of the mobile communication network.

The base station may further include a selection circuit configured to select the other base station from a plurality of other base stations. In one embodiment, the selection circuit is configured to select the other base station from a plurality of other base stations in response to an increase of received data to be processed (the increase may for example be an expected increase upon a configuration change, e.g. a reconfiguration of radio resources used for different radio access technologies).

The selection circuit may for example be configured to select the other base station as a base station from the plurality of other base stations having sufficient free processing resources to process the received data or being able to free sufficient processing resources to process the received data. The base station may then for example request the other base station to free the processing resources and the other base station may perform a corresponding reconfiguration (for example free up processing resources by stopping service of a certain radio access technology or a certain frequency band).

In one embodiment, the received data is a first part of data received from the communication terminal and wherein the base station further includes a data processing circuit configured to process a second part of the data received from the communication terminal. In other words, the base station only forwards a part of overall received data to the data processing device.

According to one embodiment, the receiver is configured to receive the first part of data according to a first radio access technology and is configured to receive the second part of data according to a second radio access technology, wherein the first radio access technology is different from the second radio access technology.

For example, the first radio access technology and the second radio access technology are at least one of radio access technology according to GSM, UMTS, and LTE.

In one embodiment, the receiver is configured to receive the first part of data using a first frequency region and is configured to receive the second part of data according to a second frequency region, wherein the first frequency region is different from the second frequency region.

The base station according may further include a data processing circuit and a determining circuit, wherein the determining circuit is configured to determine whether the received data is to be processed by the data processing circuit or is to be forwarded to the data processing device and the forwarding circuit is configured to forward the received data to the data processing device if it has been determined that the received data is to be forwarded to the data processing device.

The determining circuit is for example configured to determine whether the received data is to be processed by the data processing circuit or is to be forwarded to the data processing device based on at least one of a load of the base station and a number of users in a radio cell operated by the base station.

The base station may further include a data processing circuit configured to further process the processed data.

According to one embodiment, a data processing device of a mobile communication network is provided including a receiver configured to receive, from a base station of the mobile communication network, data transmitted by a communication terminal and received by the base station; a processing circuit configured to carry out at least a part of data reception processing for extracting, from the received data, data to be transmitted from the communication terminal; and a transmitter configured to transmit the processed received data to the base station.

The data processing device is for example another base station of the mobile communication network. The other base station is for example operating a mobile radio cell and is configured to re-allocate computational resources from providing communication in the mobile radio cell to the processing of the data received from the base station. In other words, the other base station may stop supporting some communication, e.g. in certain frequency regions or according to certain communication standards (that are for example underused in the mobile radio cell), to free up computational resources for helping the base station, i.e. for taking over processing tasks of the base station.

According to embodiments, methods according to the base station and data processing device described above are provided.

It should be noted that embodiments described in context of the base station are analogously valid for the data processing device and the methods and vice versa.

In an embodiment, a "circuit" may be understood as any kind of a logic implementing entity, which may be special purpose circuitry or a processor executing software stored in a memory, firmware, or any combination thereof. Thus, in an embodiment, a "circuit" may be a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "circuit" may also be a processor executing software, e.g. any kind of computer program, e.g. a computer program using a virtual machine code such as e.g. Java. Any other kind of implementation of the respective functions which will be described in more detail below may also be understood as a "circuit" in accordance with an alternative embodiment.

An embodiment may be seen to be based on splitting the decoding of (selected) bands (i.e. the decoding of the data sent via the bands, i.e. frequency regions) among neighbouring base stations 103. For example, in the example described above with reference to figure 2, it may have been necessary to suppress some of the GSM band (i.e. to make the first frequency region 204 smaller) and to move UMTS there (i.e. to relocate the third frequency band 206), since not enough processing resources have been available in the base station 103 for extending the LTE bandwidth from 5MHz to 10 MHz (i.e. for enlarging the fourth frequency region 207). The processing resources (also referred to as computational resources) may for example be Base Band (ASIC, application specific integrated circuit) processing resources, radio frequency processing resources, SDR (Software Defined Radio) or Reconfigurable Radio processing resources, processing power of a CPU (central processing unit), DSP (digital signal processor), etc, of the base station 103, etc.

According to one embodiment, this can be avoided by moving decoding tasks for some of the bands (i.e. the frequency regions served by the base station 103) to neighbouring, underused base stations 103.

An embodiment in which the decoding of (selected) bands is transferred from one base station to one or more neighbouring base stations is described in the following.

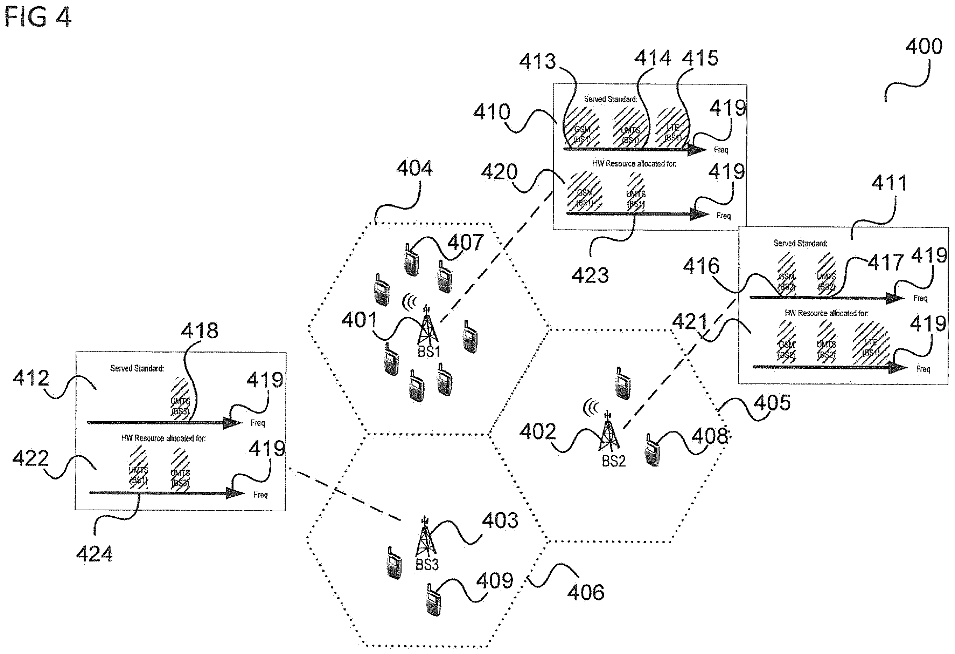

Figure 4 shows a communication arrangement 400 according to an embodiment.

The communication arrangement includes a first base station 401 operating a first mobile radio cell 404, a second base station 402 operating a second mobile radio cell 405, and a third base station 403 operating a third mobile radio cell 406.

A first plurality of mobile terminals 407 is located in the first mobile radio cell 404 and camped on the first base station 401, a second plurality of mobile terminals 408 is located in the second mobile radio cell 405 and camped on the second base station 402, and a third plurality of mobile terminals 409 is located in the third mobile radio cell 406 and camped on the third base station 403.

The spectrum allocation used by the first base station 401 is illustrated in a first spectrum allocation diagram 410, the spectrum allocation used by the second base station 402 is illustrated in a second spectrum allocation diagram 411, and the spectrum allocation used by the third base station 403 is illustrated in a third spectrum allocation diagram 412.

As illustrated in the first spectrum allocation diagram 410, the first base station 401 serves (i.e. provides for mobile terminals 407 located in the first mobile radio cell 404) GSM communication (i.e. communciation according to GSM) in a first frequency region 413, UMTS communication in a second frequency region 414, and LTE communication in a third frequency region 415.

As illustrated in the second spectrum allocation diagram 411, the second base station 402 serves (i.e. provides for mobile terminals 408 located in the second mobile radio cell 405) GSM communication (i.e. communciation according to GSM) in a fourth frequency region 416, and UMTS communication in a fifth frequency region 417.

As illustrated in the third spectrum allocation diagram 412, the third base station 403 serves (i.e. provides for mobile terminals 409 located in the third mobile radio cell 406) UMTS communication in a sixth frequency region 418.

Data transmitted by one of the mobile terminals 407, 408, 409 is directed to either one of the base stations 401, 402, 403, i.e. either one of the base stations 401, 402, 403 is responsible for the handling of the data although according to CoMP, the data may be received by another base station (and is then forwarded to the responsible base station). For example, data transmitted according to GSM in the second frequency region 416 which is part of the first frequency region 413 and is thus served by both the first base station 401 and the second base station 402 is either directed to the first base station 401 or the second base station 402, e.g. depending on which base station 401, 402 (or corresponding mobile radio cell 404, 405) the mobile terminal sending the data is camped.

The relative positions of the various frequency regions 413 to 418 is indicated by their position on a frequency axis 419.

A first hardware resource allocation diagram 420 illustrates for which frequency regions (and communication technologies) the first base station 401 performs decoding of the data received from the mobile terminals 407, 408, 409 located in any of the mobile radio cells 404, 405, 406.

A second hardware resource allocation diagram 421 illustrates for which frequency regions (and communication technologies) the second base station 402 performs decoding of the data received from the mobile terminals 407, 408, 409 located in any of the mobile radio cells 404, 405, 406.

A third hardware resource allocation diagram 422 illustrates for which frequency regions (and communication technologies) the third base station 403 performs decoding of the data received from the mobile terminals 407, 408, 409 located in any of the mobile radio cells 404, 405, 406.

As illustrated in the first hardware resource allocation diagram 420, the first base station 401 performs decoding for GSM communication in the frist frequency region 413 and for UMTS communication in a first part 413 of the second frequency region 414.

As illustrated in the second hardware resource allocation diagram 421, the second base station 402 performs decoding for GSM communication in the fourth frequency region 416, UTMS communication in the fifth frequency region 417 (which forms part of the second frequency region 414) and LTE communication in the third frequency region 415.

As illustrated in the third hardware resource allocation diagram 422, the third base station 403 performs decoding for UMTS communication in a second part 424 of the second frequency region 414 and for UMTS communication in a sxith frequency region 418.

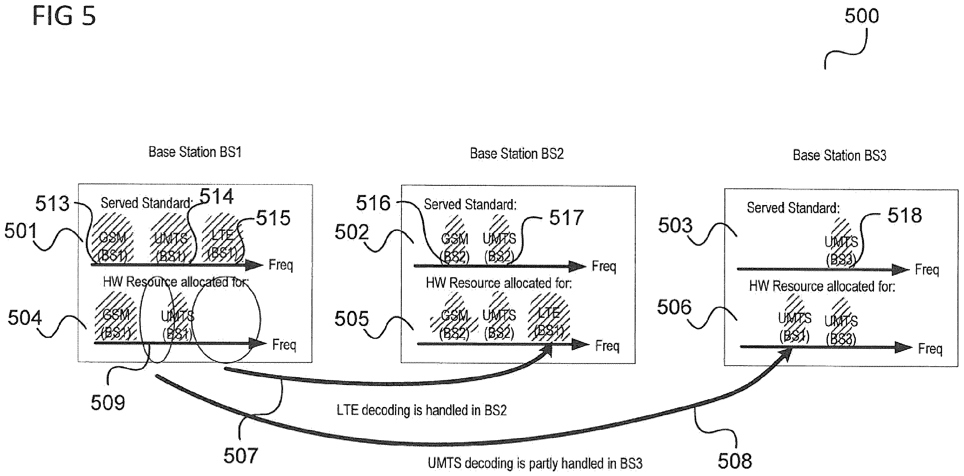

The distribution of decoding tasks (in other words how the decoding of (sub-)bands has been moved to neighbouring base stations) is illustrated in more detail in figure 5.

Figure 5 shows spectrum allocation diagrams 501, 502, 503 and hardware allocation diagrams 504, 505, 506.

A first spectrum allocation diagram 501 corresponds to the first spectrum allocation diagram 410, a second spectrum allocation diagram 502 corresponds to the second spectrum allocation diagram 411, and a third spectrum allocation diagram 503 corresponds to the third spectrum allocation diagram 412. Analogously to the spectrum allocation diagrams 410, 411, 412, the spectrum allocation diagrams 501, 502, 503 indicate frequency regions 513 to 518.

A first hardware allocation diagram 504 corresponds to the first hardware allocation diagram 420, a second hardware allocation diagram 505 corresponds to the second hardware allocation diagram 421, and a third hardware allocation diagram 506 corresponds to the third hardware allocation diagram 422.

As can be seen and as indicated by a first arrow 507 LTE communication is supported by the first base station 401 in the third frequency region 515 and the second base station 402 performs decoding for this communication.

As can be further be seen and as indicated by a second arrow 508 UMTS communication is supported by the first base station 401 in the second frequency region 514 and the third base station 402 performs decoding for the part of this communication using a part 509 of the second frequency region 514 (corresponding to the second part 424 of the second frequency region 414).

A direct (e.g. fiber) connection between the base stations 401, 402, 403 may be exploited in order to transfer the corresponding data portions between neighbouring base stations for decoding (e.g. data received according to LTE by the first base station 401 to the second base station 402). In the framework of CoMP, the installation of such a inter-base station-connection is required in any case as well as the actual data-transfer and thus the additional overhead can be expected to be small.

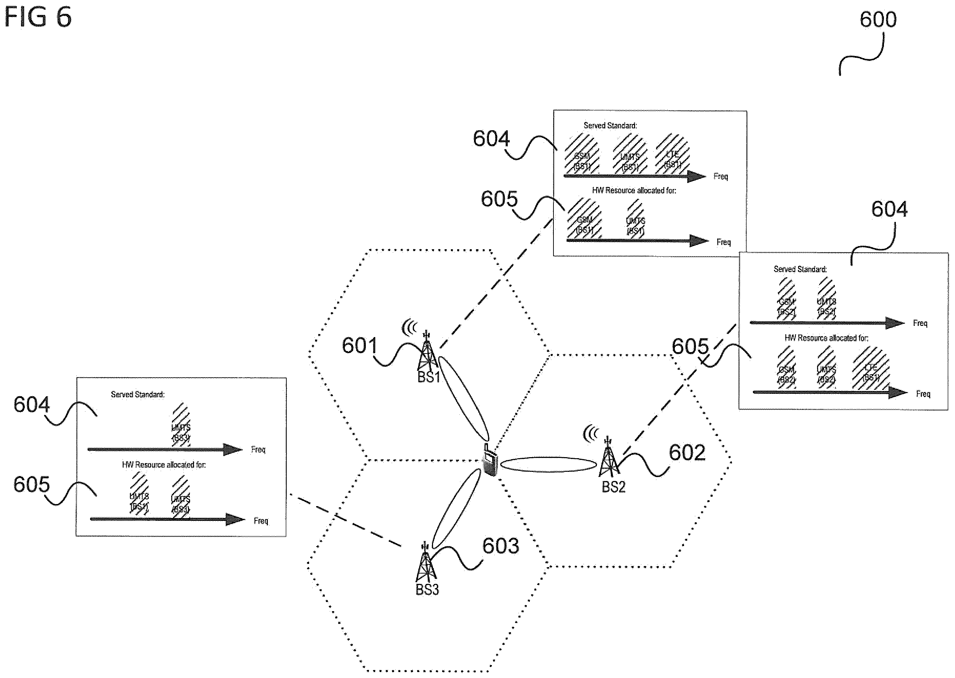

The information flow (i.e. the flow of received data and processed data) between the base stations 401, 402, 403 in the above example for HPR sharing among neighbouring base stations (in this example in the framework of CoMP) is described in the following with reference to figures 6 to 9.

Figure 6 shows a communication arrangement 600 according to an embodiment.

The communication arrangement 600 includes a first base station 601, a second base station 602, and a third base station 603 corresponding to the base stations 501, 502, 503 shown in figure 5.

Spectrum allocation diagrams 604 and hardware resouce allocation diagrams 605 are shown corresponding to the spectrum allocation diagrams 410, 411, 412 and the hardware allocation diagrams 420, 421, 422.

The following example is explained with reference to a single mobile terminal 606 which is located such that signals transmitted by the mobile terminal 606 can be received by all of the neighbouring base stations 601, 602, 603.

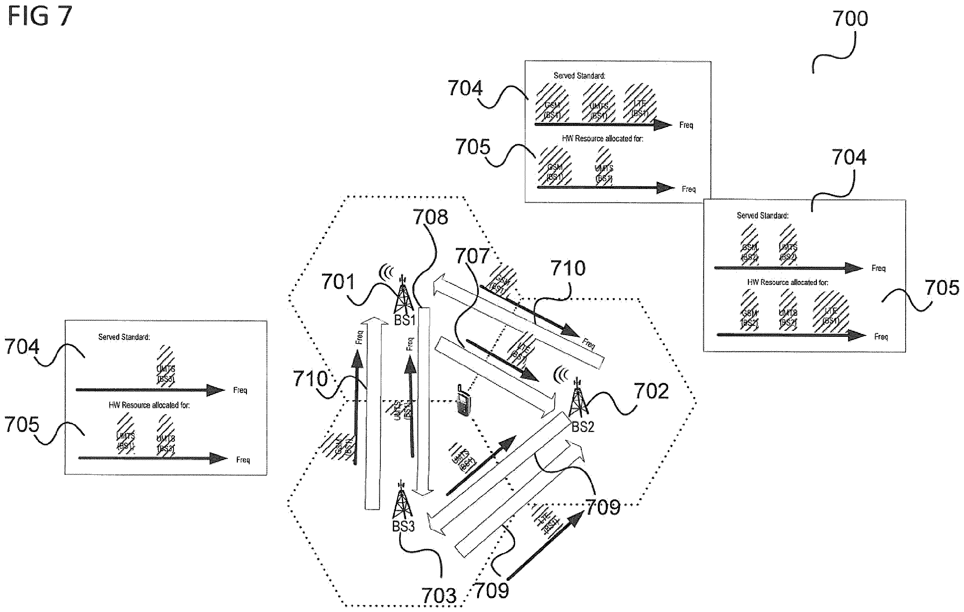

The exchange of data transmitted by the mobile terminal and received by the base stations 601, 602, 603 (also referred to as "received data" in the following) between the base stations 601, 602, 603 is explained in the following with reference to figure 7.

Figure 7 shows a data flow in a communication arrangement 700.

The communication arrangement 700 corresponds to the communication arrangement 600 and includes a first base station 701, a second base station 702, and a third base station 703 corresponding to the base stations 601, 602, 603 and a mobile terminal 706 corresponding to the mobile terminal 606.

For illustration purposes, spectrum allocation diagrams 704 and hardware resouce allocation diagrams 705 are shown corresponding to the spectrum allocation diagrams 410, 411, 412 and the hardware allocation diagrams 420, 421, 422.

It is assumed that the first base station 701 receives data transmitted by the mobile terminal 706 according to LTE using the third frequency region 415. Since the second base station 702 performs decoding for this data as explained with reference to figure 5, this data is transmitted from the first base station 701 to the second base station 702 in a first data transfer 707.

Similarly, it is assumed that the first base station 701 receives data transmitted by the mobile terminal 706 according to UMTS using the second part 424 of the second frequency region 414. Since the third base station 703 performs decoding for this data as explained with reference to figure 5, this data is transmitted from the first base station 701 to the third base station 703 in a second data transfer 708.

Third data transfers 709 may be carried out by base stations having received data (for which they are not responsible themselves) to a base station which performs the decoding of the data. For example, data transmitted according to LTE in the third frequency region 415 is forwarded by the third base station 703 to the second base station 702.

Fourth data transfers 710 may be carried out that may be seen as data transfers for forwarding data received by one base station to the base station to which the data is directed, i.e. which is responsible for the handling of the data (and which also decodes the data). For example, data transmitted according to GSM in the first frequency region is transmitted by the second base station 702 and the third base station 703 to the first base station 701. The fourth data transfers 710 may be seen as data transfers according to conventional CoMP.

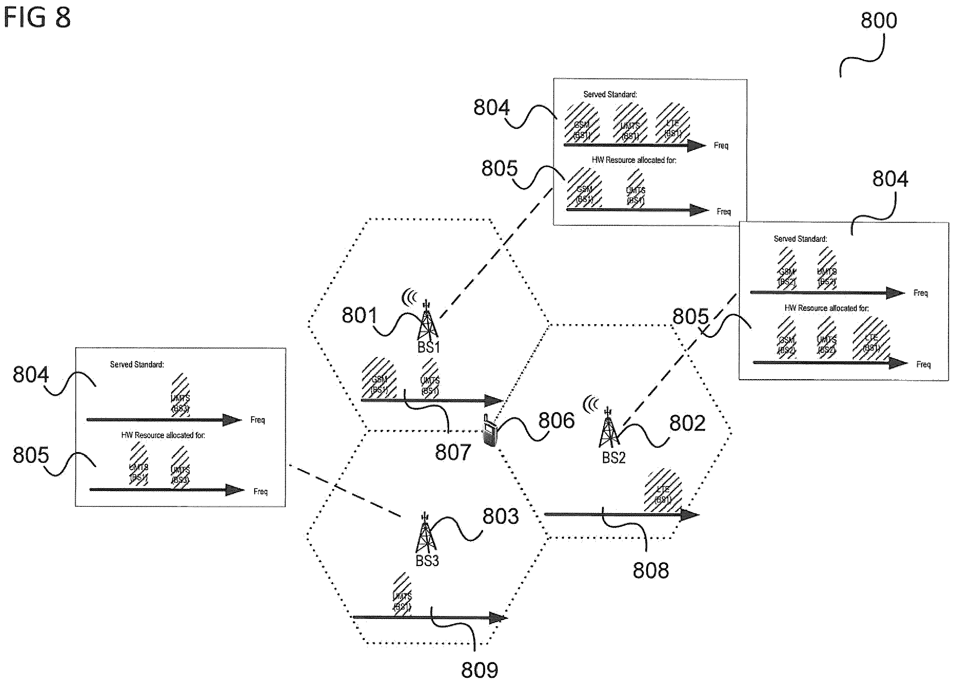

The data are then decoded by the respective base stations 701, 702, 703 performing the decoding. This is illustrated in figure 8 for the data for which the first base station 701 is responsible.

Figure 8 shows a data flow in a communication arrangement 800.

The communication arrangement 800 corresponds to the communication arrangement 600 and includes a first base station 801, a second base station 802, and a third base station 803 corresponding to the base stations 601, 602, 603 and a mobile terminal 806 corresponding to the mobile terminal 606.

For illustration purposes, spectrum allocation diagrams 804 and hardware resouce allocation diagrams 805 are shown corresponding to the spectrum allocation diagrams 410, 411, 412 and the hardware allocation diagrams 420, 421, 422.

As illustrated by a first decoding diagram 807, the first base station 801 decodes data for which it is responsible transmitted according to GSM in the first frequency region 413 (see figure 4) and data for which it is responsible transmitted according to UMTS in the first part 423 of the second frequency region 414.

As illustrated by a second decoding diagram 808, the second base station 802 decodes data for which the first base station 801 is responsible transmitted according to LTE in the third frequency region 415.

As illustrated by a third decoding diagram 809, the third base station 803 decodes data for which the first base station 801 is responsible transmitted according to UMTS in the second part 424 of the second frequency region 414.

It should be noted that this processing corresponds to the distribution of decoding tasks as explained with reference to figure 5.

It should further be noted that the decoding of data for which the second base station 802 is responsible and of data for which the third base station 803 is responsible is omitted in figure 8 for reasons of clarity of illustration.

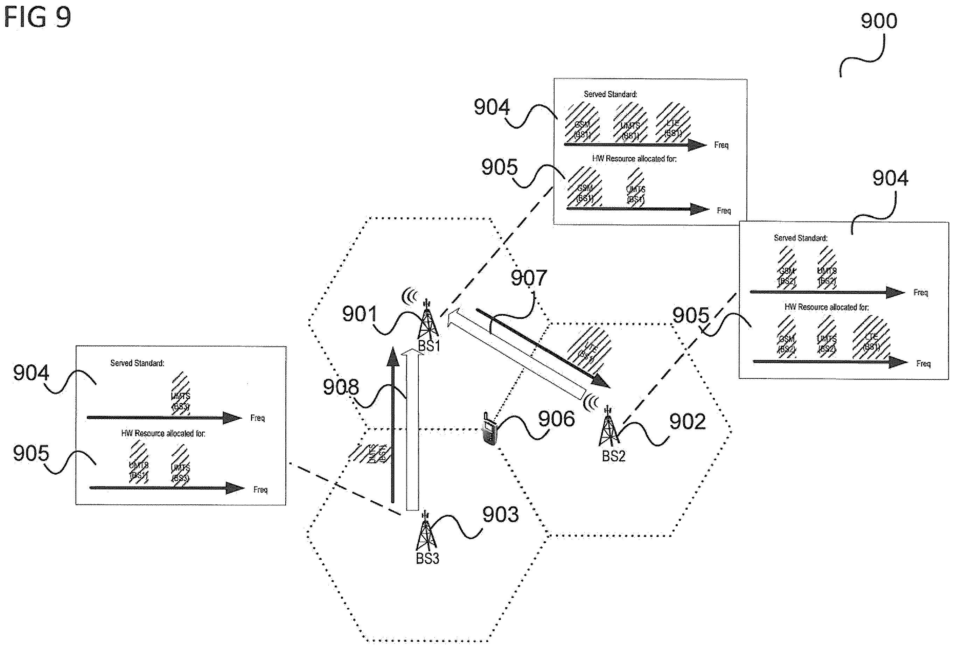

Data that has been decoded by a base station which is not responsible for the data is then sent to the base station responsible for the data. This is illustrated in figure 9 for the data for which the first base station 801 is responsible.

Figure 9 shows a data flow in a communication arrangement 900 according to an embodiment.

The communication arrangement 900 corresponds to the communication arrangement 600 and includes a first base station 901, a second base station 902, and a third base station 903 corresponding to the base stations 601, 602, 603 and a mobile terminal 906 corresponding to the mobile terminal 606.

For illustration purposes, spectrum allocation diagrams 904 and hardware resouce allocation diagrams 905 are shown corresponding to the spectrum allocation diagrams 410, 411, 412 and the hardware allocation diagrams 420, 421, 422.

Received data for which the first base station 901 is responsible and which has been decoded by the second base station 902 (transmitted according to LTE in the third frequency region 415) is transmitted from the second base station 902 to the first base station 901 in a first data transfer 907.

Received data for which the first base station 901 is responsible and which has been decoded by the third base station 903 (transmitted according to UMTS in the second part 424 of the second frequency region 414) is transmitted from the third base station 903 to the first base station 901 in a second data transfer 908.

This process may also be seen as the concentration of all data for which the first base station 901 is responsible in the first base station 901.

It should be noted that the data transfers 907, 908 may represent some (limited) overhead with respect to conventional CoMP.

In one embodiment, if directly neighbouring base stations are overloaded (for example in the context of a festival, etc.), it is possible to transfer the decoding tasks to base stations that are further away,

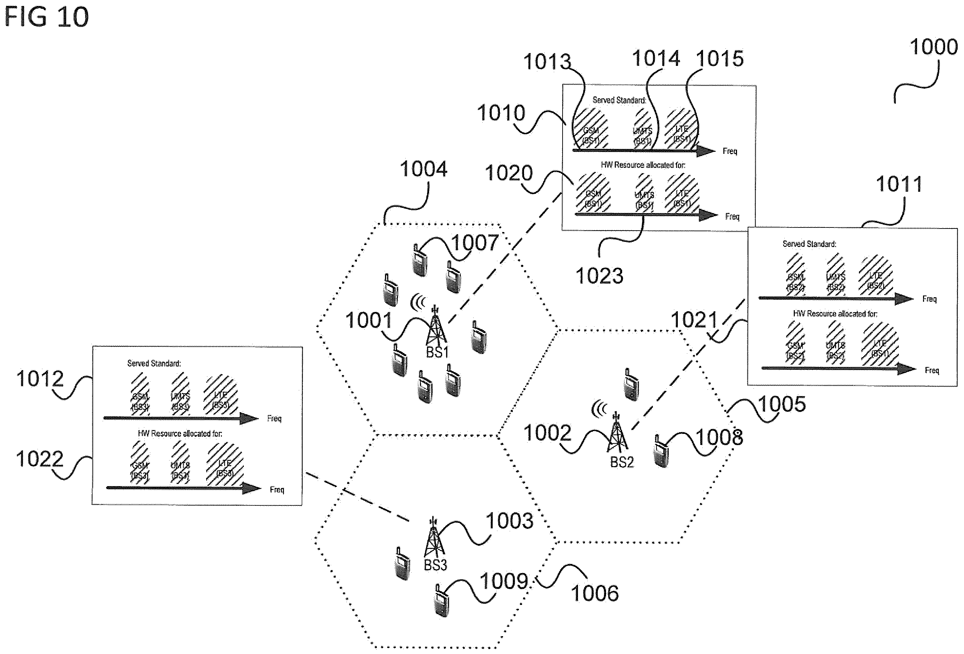

In one embodiment, available bands and/or the number of served communication standards may be reduced in the proximity of heavily loaded cells (or, equivalently, base stations) in order to free decoding capacity in neighbouring cells. This is explained in the following with reference to figure 10.

Figure 10 shows a communication arrangement 1000 according to an embodiment.

Similarly to the communication arrangement 400 shown in figure 4, the communication arrangement 1000 includes a first base station 1001 operating a first mobile radio cell 1004, a second base station 1002 operating a second mobile radio cell 1005, and a third base station 1003 operating a third mobile radio cell 1006.

A first plurality of mobile terminals 1007 is located in the first mobile radio cell 1004 and camped on the first base station 1001, a second plurality of mobile terminals 1008 is located in the second mobile radio cell 1005 and camped on the second base station 1002, and a third plurality of mobile terminals 1009 is located in the third mobile radio cell 1006 and camped on the third base station 1003.

The spectrum allocation used by the first base station 1001 is illustrated in a first spectrum allocation diagram 1010, the spectrum allocation used by the second base station 1002 is illustrated in a second spectrum allocation diagram 1011, and the spectrum allocation used by the third base station 1003 is illustrated in a third spectrum allocation diagram 1012.

A first hardware resource allocation diagram 1020 illustrates for which frequency regions (and communication technologies) the first base station 1001 performs decoding.

A second hardware resource allocation diagram 1021 illustrates for which frequency regions (and communication technologies) the second base station 1002 performs decoding.

A third hardware resource allocation diagram 1022 illustrates for which frequency regions (and communication technologies) the third base station 1003 performs decoding.

As can be seen, in this example, initially, all three base stations 1001, 1002, 1003 provide GSM communication in a first frequency region 1013, UTMS communication in a second frequency region 1014, and LTE communication in a third frequency region 1015 and decode the data for which they are responsible by themselves.

Thus, each base station 1001, 1002, 1003 is able to meet the decoding hardware resource requirements.

In the following, it is assumed that the first mobile radio cell 1004 has a high load. In order to enable all mobile terminals 1007 in the heavily loaded first mobile radio cell 1004 (managed by the first base station 1001) to meet their QoS requirements, for example, the available computational resources (e.g. HPR) may be increased in the first mobile radio cell 1004. For example, LTE communication is to be provided in a broader frequency region (e.g. broader frequency band) than the third frequency region 1015 in the first mobile radio cell. In order to have the required computational resources for decoding the related signals (i.e. the data received by means of the LTE communication), some sub-bands may be treated by the neighbouring base stations 1002, 1003, i.e. decoding tasks may be distributed to the neighbouring base stations 1002, 1003. For example, the neighbouring base stations 1002, 1003 do not longer serve frequency regions or radio access technologies that are underused and reallocate computational resources freed in this way to decoding taske for the first base station 1001, i.e. for the decoding of data for which the first base station 1001 is responsible.

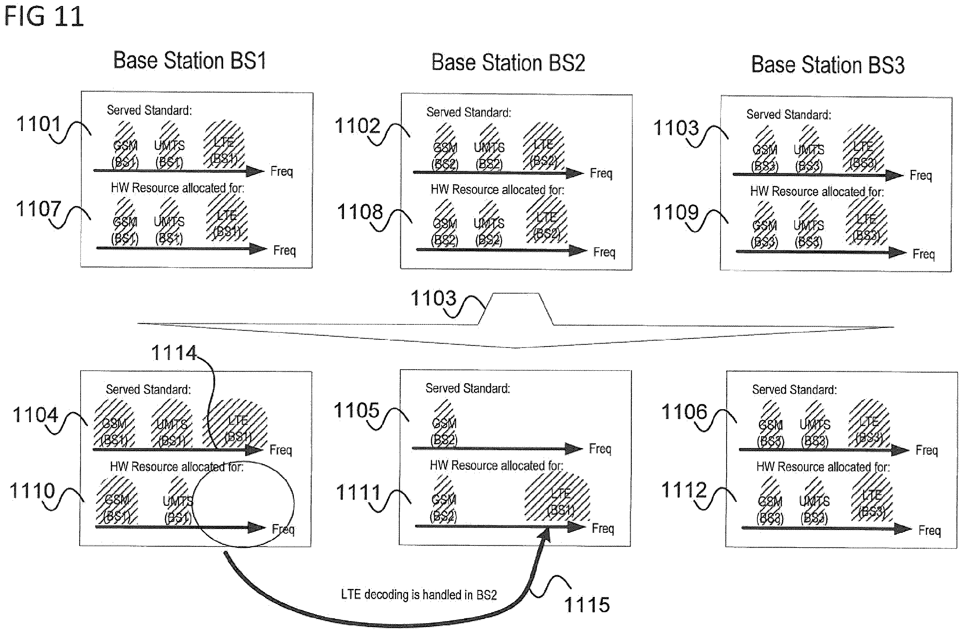

An example for a change of computational resource allocation is illustrated in figure 11.

Figure 11 shows spectrum allocation diagrams 1101 to 1106 and hardware allocation diagrams 1107 to 1112.

A first spectrum allocation diagram 1101 corresponds to the first spectrum allocation diagram 1010, a second spectrum allocation diagram 1102 corresponds to the second spectrum allocation diagram 1011, and a third spectrum allocation diagram 1103 corresponds to the third spectrum allocation diagram 1012.

A first hardware allocation diagram 1107 corresponds to the first hardware allocation diagram 1020, a second hardware allocation diagram 1108 corresponds to the second hardware allocation diagram 1021, and a third hardware allocation diagram 1106 corresponds to the third hardware allocation diagram 1022.

The first spectrum allocation diagram 1101, the second spectrum allocation diagram 1102, the third spectrum allocation diagram 1003, the first hardware allocation diagram 1107, the second hardware allocation diagram 1108, and the third hardware allocation diagram 1106 are assumed to correspond to an initial configuration of the communication arrangement 1000.

As indicated by a first arrow 1113, the fourth spectrum allocation diagram 1104, the fifth spectrum allocation diagram 1105, the sixth spectrum allocation diagram 1006, the fourth hardware allocation diagram 1110, the fifth hardware allocation diagram 1111, and the sixth hardware allocation diagram 1112 are assumed to correspond to a changed configuration of the communication arrangement 1000.

As can be seen the second base station 1002 has quit supporting communication in the second frequency region 1014 and the third frequency region 1015 to free up computational resources. For example, the second frequency region 1014 has been underused in the second mobile radio cell 1005.

The computational resources freed up in the second base station 1002 are used for taking over the decoding of the data received by LTE communication in a fourth frequency region 1114 served by the first base station 1001 which may be seen as an enlarged third frequency region 1015, In other words, the first base station 1001 now supports a large LTE frequency band (i.e. supports LTE communication in a larger frequency region 1114) with help for the decoding by the second base station 1002.

In the embodiments described above, the complete decoding (e.g. the decoding of I/Q samples to IP (Internet Protocol) packets) of data was transferred from the base station responsible for the data to another base station. According to one embodiment, only selected (but not all) decoding tasks are distributed from a base station to one or more (neighbouring) other base stations.

In one embodiment, selected operations of data reception processing (e.g. decoding operations of Base-Band decoding processing) are distributed to another base station. For example, typical (base-band) operations to be carried out for received data by a base station in uplink data transmission may include
∘ MIMO decoding,
∘ Symbol Demapping,
∘ De-Interleaving,
∘ Channel Decoding (e.g., Turbo Decoding, LDPC Decoding, etc.),
∘ CRC checking
∘ Retransmission Handling (e.g. H-ARQ processing)

For example, any processing operation that needs to be carried out for generating layer 3 data (e.g. IP packets) from received data (e.g. baseband samples such as I/Q samples) may be distributed to another base station and the processing result is returned by the other base station.

Some of the exemplary operations (and/or further ones) in the above list may for example be distributed by a base station to one or more other (e.g. neighbouring) base stations such that the base station can avoid the allocation of computational resources for highly complex and computation intensive tasks.

For example, in the communication arrangement 600 shown in figure 6, channel decoding can be transferred to a neighbouring base station 602, 603 such that enough resources are freed for the first base station 601 to maintain support for all other required bands/standards, e.g. for GSM communication as well as UMTS communication as well as LTE communication.

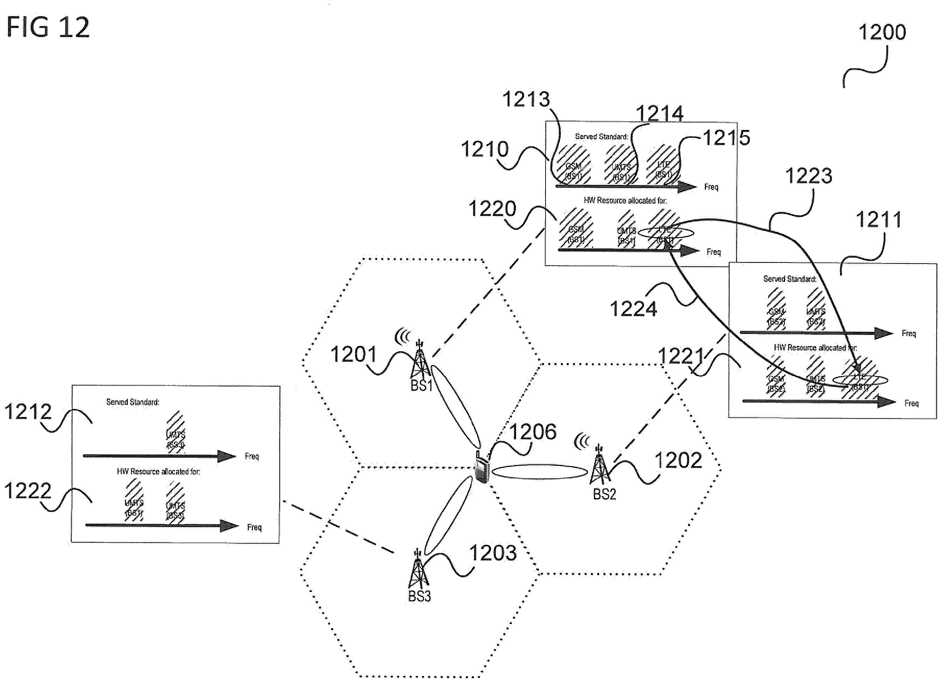

This is illustrated in figure 12.

Figure 12 shows a data flow in a communication arrangement 1200.

The communication arrangement 1200 corresponds to the communication arrangement 600 and includes a first base station 1201, a second base station 1202, and a third base station 1203 corresponding to the base stations 601, 602, 603 and a mobile terminal 1206 corresponding to the mobile terminal 606.

The spectrum allocation used by the first base station 1201 is illustrated in a first spectrum allocation diagram 1210, the spectrum allocation used by the second base station 1202 is illustrated in a second spectrum allocation diagram 1211, and the spectrum allocation used by the third base station 1203 is illustrated in a third spectrum allocation diagram 1212.

As illustrated in the first spectrum allocation diagram 1210, the first base station 1201 serves GSM communication in a first frequency region 1213, UMTS communication in a second frequency region 1214, and LTE communication in a third frequency region 1215.

A first hardware resource allocation diagram 1220 illustrates for which frequency regions (and communication technologies) the first base station 1201 performs decoding.

A second hardware resource allocation diagram 1221 illustrates for which frequency regions (and communication technologies) the second base station 1202 performs decoding.

A third hardware resource allocation diagram 1222 illustrates for which frequency regions (and communication technologies) the third base station 1203 performs decoding.

It is assumed that the first base station 1201 does not have enough computational resources for decoding the data received according to GSM in the first frequency region 1213, the data received according to UMTS in the second frequency region 1214, and the data received according to LTE in the third frequency region 1215.

Therefore, the first base station distributes computationally complex operations (e.g. channel decoding) to a neighbouring base station, the second base station 1202 in this example.

The data to be processed (e.g. channel decoded), in this example data received according to LTE in the third frequency band 1215 is transmitted in a first data transfer 1223 to the second base station 1202 which carries out the processing and sends back the processed received data to the first base station 1201 in a second data transfer 1224.

Processing operations may thus be distributed to the second base station 1202 such that the computational resources of the base station 1201 are sufficient to carry out the remaining tasks necessary for reception processing such that communication according to GSM in the first frequency region 1213, communication according to UMTS in the second frequency region 1214, and communication according to LTE in the third frequency region 1215 can be supported by the first base station 1201.

A reason for off-loading (i.e. distributing) only a part of the decoding operations (or generally the reception processing operations) may arise from the reduced bandwidth requirements for the inter-base station communication if only some of the decoding operations are distributed. For example, the full transfer of all data received in a frequency band and to be decoded by a neighbouring base station (for example as illustrated in figure 11) may require the transfer of base band samples (such as I/Q samples e.g. analogue-to-digital converter outputs), which may represent a massive amount of data. In case of the distribution of only some operations of reception processing (such as illustrated in figure 12) a less amount of data may need to be transferred. For example, for distributing the channel decoding from a base station to another base station, the channel decoding metrics are transferred to the other base station and the decoded bits (or the soft outputs of the decoder in the worst case) are then transmitted back to the base station. Typically, this represents only a fraction of the amount of data that is required for baseband sample (such as I/Q sample) transmission.

In one embodiment, if directly neighbouring base stations are also overloaded in terms of utilization of their computational resoruces (for example in the context of a festival, etc.), reception processing tasks may be distributed to base stations that are further away.

It should further be noted that reception processing tasks may not only be distributed to other base stations but also to other data processing devices, for example using a cloud of available data processing devices which are suitable and/or available at times to process data as required.

## Claims

1. A base station (300) of a mobile communication network comprising:
a first receiver (301) configured to receive data transmitted by a communication terminal (303) wherein the received data (306) is to be processed according to a data reception processing for extracting, from the received data (306), data to be transmitted from the communication terminal (303);
a forwarding circuit (304) configured to forward the received data (306) to another base station of the mobile communication network for carrying out at least a part of the data reception processing of the received data (306); and
a second receiver (307) configured to receive the processed data (308) from the other base station, wherein the base station (300) and the other base station belong to a coordinated multipoint transmission and reception (CoMP) set;
wherein the received data (306) is a first part of data received from the communication terminal (303) and wherein the base station (300) further comprises a data processing circuit configured to process a second part of the data received from the communication terminal (303); and
the receiver is configured to receive the first part of data using a first frequency region and is configured to receive the second part of data according to a second frequency region, wherein the first frequency region is different from the second frequency region.

2. The base station (300) according to claim 1, wherein the data reception processing is a data link layer processing of the received data (306), and/or a decoding of the received data (306).

3. The base station (300) according to claims 1 or 2, wherein the data is to be transmitted to another communication device, and/or wherein the received data (306) are baseband sample signal values of a signal transmitted by the communication terminal (303).

4. The base station (300) according to any one of claims 1 to 3, wherein the processed data (308) is at least one layer 3 data packet, or wherein the processed data (308) is at least one IP packet.

5. The base station (300) according to any one of claims claim 1 to 4, wherein the processing includes at least one of
multiple-input multiple output decoding;
symbol demapping;
de-interleaving;
channel decoding;
error checking; and
retransmission handling.

6. The base station (300) according to any one of claims 1 to 5, wherein the first receiver (301) is radio receiver; and/or
wherein the forwarding circuit (304) is configured to forward the received data (306) via a landline connection.

7. The base station (300) according to claim 1, further comprising a selection circuit configured to select the other base station from a plurality of other base stations; wherein the selection circuit is preferably configured to select the other base station from a plurality of other base stations in response to an increase of received data to be processed; or
wherein the selection circuit is preferably configured to select the other base station as a base station from the plurality of other base stations having sufficient free processing resources to process the received data (306) or being able to free sufficient processing resources to process the received data (306).

8. The base station (300) according to any one of claims 1 to 7,
wherein the receiver is preferably configured to receive the first part of data according to a first radio access technology and is configured to receive the second part of data according to a second radio access technology, wherein the first radio access technology is different from the second radio access technology;
and
wherein the first radio access technology and the second radio access technology are preferably at least one of radio access technology according to GSM, UMTS, and LTE.

9. The base station (300) according to any one of claims 1 to 8, further comprising a data processing circuit and a determining circuit, wherein the determining circuit is configured to determine whether the received data (306) is to be processed by the data processing circuit or is to be forwarded to the other base station and the forwarding circuit is configured to forward the received data (306) to the other base station if it has been determined that the received data (306) is to be forwarded to the other base station.

10. The base station (300) according to claim 9, wherein the determining circuit is configured to determine whether the received data (306) is to be processed by the data processing circuit or is to be forwarded to the other base station based on at least one of a load of the base station and a number of users in a radio cell operated by the base station (300).

11. The base station (300) according to any one of claims 1 to 10, further comprising a data processing circuit configured to further process the processed data (308).

12. A data processing device of a mobile communication network comprising a receiver configured to receive, from a base station (300) of the mobile communication network, data transmitted by a communication terminal and received by the base station; a processing circuit configured to carry out at least a part of data reception processing for extracting, from the received data, data to be transmitted from the communication terminal; and
a transmitter configured to transmit the processed received data to the base station; wherein the data processing device is another base station of the mobile communication network, and wherein the base station and the other base station belong to a coordinated multipoint transmission and reception (CoMP) set;
wherein the received data is a first part of data received from the communication terminal and wherein the base station further comprises a data processing circuit configured to process a second part of the data received from the communication terminal; and
the receiver is configured to receive the first part of data using a first frequency region and is configured to receive the second part of data according to a second frequency region, wherein the first frequency region is different from the second frequency region.

13. The data processing device of claim 12, operating a mobile radio cell and being configured to re-allocate computational resources from providing communication in the mobile radio cell to the processing of the data received from the base station.

14. A method for processing data comprising:
a base station receiving data transmitted by a communication terminal wherein the received data is to be processed according to a data reception processing for extracting, from the received data, data to be transmitted from the communication terminal;
forwarding the received data to another base station of the mobile communication network for carrying out at least a part of the data reception processing of the received data; and
the base station receiving the processed data from the other base station, wherein the base station and the other base station belong to a coordinated multipoint transmission and reception (CoMP) set;
wherein the received data is a first part of data received from the communication terminal and wherein the base station further comprises a data processing circuit configured to process a second part of the data received from the communication terminal;
and
the receiver is configured to receive the first part of data using a first frequency region and is configured to receive the second part of data according to a second frequency region, wherein the first frequency region is different from the second frequency region.

## Patentansprüche

1. Basisstation (300) eines Mobilkommunikationsnetzwerks, umfassend:
einen ersten Empfänger (301), der konfiguriert ist, um Daten zu empfangen, die von einem Kommunikationsendgerät (303) übertragen werden, wobei die empfangenen Daten (306) gemäß einer Datenempfangsverarbeitung verarbeitet werden sollen, um Daten aus den empfangenen Daten (306) zu extrahieren, die von dem Kommunikationsendgerät (303) übertragen werden sollen
eine Weiterleitungsschaltung (304), die konfiguriert ist, um die empfangenen Daten (306) an eine andere Basisstation des Mobilkommunikationsnetzwerks weiterzuleiten, um zumindest einen Teil der Datenempfangsverarbeitung der empfangenen Daten (306) durchzuführen; und
einen zweiten Empfänger (307), der konfiguriert ist, um die verarbeiteten Daten (308) von der anderen Basisstation zu empfangen, wobei die Basisstation (300) und die andere Basisstation zu einem koordinierten Mehrpunktübertragungs- und empfangs- (Co-ordinated Multipoint, CoMP)-Satz gehören;
wobei die empfangenen Daten (306) ein erster Teil von Daten sind, die von dem Kommunikationsendgerät (303) empfangen werden, und wobei die Basisstation (300) ferner eine Datenverarbeitungsschaltung umfasst, die konfiguriert ist, um einen zweiten Teil der von dem Kommunikationsendgerät (303) empfangenen Daten zu verarbeiten; und
der Empfänger konfiguriert ist, um den ersten Teil von Daten unter Verwendung eines ersten Frequenzbereichs zu empfangen, und konfiguriert ist, um den zweiten Teil von Daten gemäß einem zweiten Frequenzbereich zu empfangen, wobei der erste Frequenzbereich sich von dem zweiten Frequenzbereich unterscheidet.

2. Basisstation (300) nach Anspruch 1, wobei die Datenempfangsverarbeitung eine Datenverbindungsschichtverarbeitung der empfangenen Daten (306) und/oder Dekodieren der empfangenen Daten (306) darstellt.

3. Basisstation (300) nach Anspruch 1 oder 2, wobei die Daten an ein anderes Kommunikationsgerät übertragen werden sollen, und/oder
wobei die empfangenen Daten (306) Basisband-Abtastsignalwerte eines Signals sind, das durch das Kommunikationsendgerät (303) übertragen wird.

4. Basisstation (300) nach einem der Ansprüche 1 bis 3, wobei die verarbeiteten Daten (308) mindestens ein Schicht 3-Datenpaket sind oder wobei die verarbeiteten Daten (308) mindestens ein IP-Paket sind.

5. Basisstation (300) nach einem der Ansprüche 1 bis 4, wobei die Verarbeitung mindestens eines der Folgenden einschließt Mehrfacheingang/Mehrfachausgang-Dekodierung;
Symbol-Demapping;
Entschachtelung;
Kanaldekodierung;
Fehlerüberprüfung; und
Neuübertragungsabwicklung.

6. Basisstation (300) nach einem der Ansprüche 1 bis 5, wobei der erste Empfänger (301) ein Funkempfänger ist; und/oder
wobei die Weiterleitungsschaltung (304) konfiguriert ist, um die empfangenen Daten (306) über eine Festnetzverbindung weiterzuleiten.

7. Basisstation (300) nach Anspruch 1, ferner umfassend eine Auswahlschaltung, die konfiguriert ist, um die andere Basisstation aus einer Vielzahl von anderen Basisstationen auszuwählen; wobei die Auswahlschaltung vorzugsweise konfiguriert ist, um die andere Basisstation aus einer Vielzahl von anderen Basisstationen in Reaktion auf eine Zunahme von zu verarbeitenden empfangenen Daten auszuwählen; oder
wobei die Auswahlschaltung vorzugsweise konfiguriert ist, um die andere Basisstation als eine Basisstation aus der Vielzahl anderer Basisstationen auszuwählen, die ausreichend freie Verarbeitungsressourcen besitzen, um die empfangenen Daten (306) zu verarbeiten, oder in der Lage sind, ausreichende Verarbeitungsressourcen freizugeben, um die empfangenen Daten (306) zu verarbeiten.

8. Basisstation (300) nach einem der Ansprüche 1 bis 7,
wobei der Empfänger vorzugsweise konfiguriert ist, um den ersten Teil von Daten gemäß einer ersten Funkzugangstechnologie zu empfangen, und konfiguriert ist, um den zweiten Teil von Daten gemäß einer zweiten Funkzugangstechnologie zu empfangen, wobei sich die erste Funkzugangstechnologie von der zweiten Funkzugangstechnologie unterscheidet; und
wobei die erste Funkzugangstechnologie und die zweite Funkzugriffstechnologie vorzugsweise mindestens eine Funkzugangstechnologie gemäß GSM, UMTS und LTE sind.

9. Basisstation (300) nach einem der Ansprüche 1 bis 8, ferner umfassend eine Datenverarbeitungsschaltung und eine Bestimmungsschaltung, wobei die Bestimmungsschaltung konfiguriert ist, um zu bestimmen, ob die empfangenen Daten (306) durch die Datenverarbeitungsschaltung verarbeitet werden sollen oder an die andere Basisstation weitergeleitet werden sollen, und die Weiterleitungsschaltung konfiguriert ist, um die empfangenen Daten (306) an die andere Basisstation weiterzuleiten, wenn bestimmt wurde, dass die empfangenen Daten (306) an die andere Basisstation weitergeleitet werden sollen.

10. Basisstation (300) nach Anspruch 9, wobei die Bestimmungsschaltung konfiguriert ist, um zu bestimmen, ob die empfangenen Daten (306) von der Datenverarbeitungsschaltung verarbeitet werden sollen oder an die anderen Basisstation basierend auf zumindest einer von einer Last der Basisstation und einer Anzahl von Benutzern in einer Funkzelle, die von der Basisstation (300) betrieben wird, weitergeleitet werden sollen.

11. Basisstation (300) nach einem der Ansprüche 1 bis 10, ferner umfassend eine Datenverarbeitungsschaltung, die konfiguriert ist, um die verarbeiteten Daten (308) weiterzuverarbeiten.

12. Datenverarbeitungsvorrichtung eines Mobilkommunikationsnetzwerks, umfassend einen Empfänger, der konfiguriert ist, um Daten von einer Basisstation (300) des Mobilkommunikationsnetzwerks zu empfangen, die von einem Kommunikationsendgerät übertragen und von der Basisstation empfangen werden; eine Verarbeitungsschaltung, die konfiguriert ist, um zumindest einen Teil der Datenempfangsverarbeitung durchzuführen, um Daten aus den empfangenen Daten zu extrahieren, die von dem Kommunikationsendgerät übertragen werden sollen; und
einen Sender, der konfiguriert ist, um die verarbeiteten empfangenen Daten an die Basisstation zu übertragen; wobei die Datenverarbeitungsvorrichtung eine andere Basisstation des Mobilkommunikationsnetzwerks ist, und wobei die Basisstation und die andere Basisstation zu einem koordinierten Mehrpunktübertragungs- und -empfangs-(CoMP)-Satz gehören;
wobei die empfangenen Daten ein erster Teil von Daten sind, die von dem Kommunikationsendgerät empfangen werden, und wobei die Basisstation ferner eine Datenverarbeitungsschaltung umfasst, die konfiguriert ist, um einen zweiten Teil der von dem Kommunikationsendgerät empfangenen Daten zu verarbeiten; und
der Empfänger konfiguriert ist, um den ersten Teil von Daten unter Verwendung eines ersten Frequenzbereichs zu empfangen, und konfiguriert ist, um den zweiten Teil von Daten gemäß einem zweiten Frequenzbereich zu empfangen, wobei der erste Frequenzbereich sich von dem zweiten Frequenzbereich unterscheidet.

13. Datenverarbeitungsvorrichtung nach Anspruch 12, die eine Mobilfunkzelle betreibt und dazu konfiguriert ist, um Rechenressourcen ab der Bereitstellung von Kommunikation in der Mobilfunkzelle bis zur Verarbeitung der von der Basisstation empfangenen Daten neu zuzuweisen.

14. Verfahren für das Verarbeiten von Daten, umfassend:
eine Basisstation, die von einem Kommunikationsendgerät übertragene Daten empfängt, wobei die empfangenen Daten gemäß einer Datenempfangsverarbeitung verarbeitet werden sollen, um Daten aus den empfangenen Daten zu extrahieren, die von dem Kommunikationsendgerät übertragen werden sollen; Weiterleiten der empfangenen Daten an eine andere Basisstation des Mobilkommunikationsnetzwerks, um zumindest einen Teil der Datenempfangsverarbeitung der empfangenen Daten durchzuführen; und
Empfangen durch die Basisstation der verarbeiteten Daten von der anderen Basisstation, wobei die Basisstation und die andere Basisstation zu einem koordinierten Mehrpunktübertragungs- und empfangs-(CoMP)-Satz gehören;
wobei die empfangenen Daten ein erster Teil von Daten sind, die von dem Kommunikationsendgerät empfangen werden, und wobei die Basisstation ferner eine Datenverarbeitungsschaltung umfasst, die konfiguriert ist, um einen zweiten Teil der von dem Kommunikationsendgerät empfangenen Daten zu verarbeiten; und
der Empfänger konfiguriert ist, um den ersten Teil von Daten unter Verwendung eines ersten Frequenzbereichs zu empfangen, und konfiguriert ist, um den zweiten Teil von Daten gemäß einem zweiten Frequenzbereich zu empfangen, wobei der erste Frequenzbereich sich von dem zweiten Frequenzbereich unterscheidet.

## Revendications

1. Station de base (300) d'un réseau de communications mobile, comprenant:
un premier récepteur (301) configuré pour recevoir des données transmises par un terminal de communication (303), dans laquelle les données reçues (306) doivent être traitées conformément à un traitement de réception de données afin d'extraire, des données reçues (306), des données à transmettre depuis le terminal de communication (303) ;
un circuit de transfert (304) configuré pour transférer les données reçues (306) à une autre station de base du réseau de communications mobile afin d'exécuter au moins une partie du traitement de réception de données des données reçues (306) ; et
un second récepteur (307) configuré pour recevoir les données traitées (308) depuis l'autre station de base, dans laquelle la station de base (300) et l'autre station de base appartiennent à un ensemble coordonné multipoints d'émission et de réception (CoMP) ;
dans laquelle les données reçues (306) constituent une première partie des données reçues depuis le terminal de communication (303) et dans laquelle la station de base (300) comprend en outre un circuit de traitement de données configuré pour traiter une seconde partie des données reçues depuis le terminal de communication (303) ; et
le récepteur est configuré pour recevoir la première partie des données au moyen d'une première région de fréquences et est configuré pour recevoir la seconde partie des données conformément à une seconde région de fréquences, la première région de fréquences étant différente de la seconde région de fréquences.

2. Station de base (300) selon la revendication 1, dans laquelle le traitement de réception de données est un traitement de couche de liaison de données des données reçues (306) et/ou un décodage des données reçues (306).

3. Station de base (300) selon la revendication 1 ou 2, dans laquelle les données doivent être transmises à un autre dispositif de communication et/ou dans laquelle les données reçues (306) sont des valeurs de signal échantillon en bande de base d'un signal transmis par le terminal de communication (303).

4. Station de base (300) selon l'une quelconque des revendications 1 à 3, dans laquelle les données traitées (308) constituent au moins un paquet de données de couche 3, ou dans laquelle les données traitées (308) constituent au moins un paquet IP.

5. Station de base (300) selon l'une quelconque des revendications 1 à 4, dans laquelle le traitement inclut au moins l'un des suivants :
décodage à entrées multiples sorties multiples ;
extraction de symboles ;
désentrelacement ;
décodage de canal ;
contrôle d'erreurs ; et
gestion de retransmission.

6. Station de base (300) selon l'une quelconque des revendications 1 à 5, dans laquelle le premier récepteur (301) est un récepteur radio ; et/ou dans laquelle le circuit de transfert (304) est configuré pour transférer les données reçues (306) par le biais d'une connexion terrestre.

7. Station de base (300) selon la revendication 1, comprenant en outre un circuit de sélection configuré pour sélectionner l'autre station de base parmi une pluralité d'autres stations de base ;
dans laquelle le circuit de sélection est de préférence configuré pour sélectionner l'autre station de base parmi une pluralité d'autres stations de base en réponse à une augmentation de données reçues à traiter ; ou
dans laquelle le circuit de sélection est de préférence configuré pour sélectionner l'autre station de base en tant que station de base parmi la pluralité d'autres stations de base ayant suffisamment de ressources de traitement libres pour traiter les données reçues (306) ou étant en mesure de libérer suffisamment de ressources de traitement pour traiter les données reçues (306).

8. Station de base (300) selon l'une quelconque des revendications 1 à 7,
dans laquelle le récepteur est de préférence configuré pour recevoir la première partie des données conformément à une première technologie d'accès radio et est configuré pour recevoir la seconde partie des données conformément à une seconde technologie d'accès radio, la première technologie d'accès radio étant différente de la seconde technologie d'accès radio ; et dans laquelle la première technologie d'accès radio et la seconde technologie d'accès radio sont de préférence au moins l'une de technologies d'accès radio conformes à GSM, UMTS et LTE.

9. Station de base (300) selon l'une quelconque des revendications 1 à 8, comprenant en outre un circuit de traitement de données et un circuit de détermination, dans laquelle le circuit de détermination est configuré pour déterminer si les données reçues (306) doivent être traitées par le circuit de traitement de données ou doivent être transférées à l'autre station de base et le circuit de transfert est configuré pour transférer les données reçues (306) à l'autre station de base s'il a été déterminé que les données reçues (306) doivent être transférées à l'autre station de base.

10. Station de base (300) selon la revendication 9, dans laquelle le circuit de détermination est configuré pour déterminer si les données reçues (306) doivent être traitées par le circuit de traitement de données ou doivent être transférées à l'autre station de base sur la base d'au moins l'un d'une charge de la station de base et d'un nombre d'utilisateurs dans une cellule radio opérée par la station de base (300).

11. Station de base (300) selon l'une quelconque des revendications 1 à 10, comprenant en outre un circuit de traitement de données configuré pour appliquer un traitement supplémentaire aux données traitées (308).

12. Dispositif de traitement de données d'un réseau de communications mobile comprenant un récepteur configuré pour recevoir, depuis une station de base (300) du réseau de communications mobile, des données transmises par un terminal de communication et reçues par la station de base ; un circuit de traitement configuré pour exécuter au moins une partie d'un traitement de réception de données afin d'extraire, des données reçues, des données à transmettre depuis le terminal de communication ; et
un émetteur configuré pour transmettre les données reçues traitées à la station de base ;
dans lequel le dispositif de traitement de données est une autre station de base du réseau de communications mobile, et dans lequel la station de base et l'autre station de base appartiennent à un ensemble coordonné multipoints d'émission et de réception (CoMP) ;
dans lequel les données reçues constituent une première partie des données reçues depuis le terminal de communication et dans lequel la station de base comprend en outre un circuit de traitement de données configuré pour traiter une seconde partie des données reçues depuis le terminal de communication ; et
le récepteur est configuré pour recevoir la première partie des données au moyen d'une première région de fréquences et est configuré pour recevoir la seconde partie des données conformément à une seconde région de fréquences, la première région de fréquences étant différente de la seconde région de fréquences.

13. Dispositif de traitement de données selon la revendication 12, exploitant une cellule radio mobile et étant configuré pour réattribuer des ressources informatiques de la fourniture de la communication dans la cellule radio mobile au traitement des données reçues depuis la station de base.

14. Procédé de traitement de données, comprenant :
la réception par une station de base de données transmises par un terminal de communication, dans lequel les données reçues doivent être traitées conformément à un traitement de réception de données afin d'extraire, des données reçues, des données à transmettre depuis le terminal de communication ;
le transfert des données reçues à une autre station de base du réseau de communications mobile afin d'exécuter au moins une partie du traitement de réception de données des données reçues ; et
la réception par la station de base des données traitées depuis l'autre station de base, dans lequel la station de base et l'autre station de base appartiennent à un ensemble coordonné multipoints d'émission et de réception (CoMP) ;
dans lequel les données reçues constituent une première partie des données reçues depuis le terminal de communication et dans lequel la station de base comprend en outre un circuit de traitement de données configuré pour traiter une seconde partie des données reçues depuis le terminal de communication ; et
le récepteur est configuré pour recevoir la première partie des données au moyen d'une première région de fréquences et est configuré pour recevoir la seconde partie des données conformément à une seconde région de fréquences, la première région de fréquences étant différente de la seconde région de fréquences.
